# EUROPEAN PATENT SPECIFICATION

(11) **EP 4 095 840 B1**
(45) Date of publication and mention of the grant of the patent: **19.11.2025**
(21) Application number: 22173731.5
(22) Date of filing: 17.05.2022
(51) Int. Cl.: G09G 3/20, G09G 3/3291

(54) **LIGHT EMITTING DISPLAY DEVICE AND DRIVING METHOD OF THE SAME**
LICHTEMITTIERENDE ANZEIGEVORRICHTUNG UND ANSTEUERUNGSVERFAHREN DERSELBEN
DISPOSITIF D'AFFICHAGE ÉLECTROLUMINESCENT ET SON PROCÉDÉ DE COMMANDE

(30) Priority: 27.05.2021 KR 20210068322
(43) Date of publication of application: 30.11.2022
(73) Proprietor: LG Display Co., Ltd., Seoul 150-721 (KR)
(72) Inventor: HA, Sung Chul, Paju-si, Gyeonggi-do (KR); HONG, Jin Cheol, Paju-si, Gyeonggi-do (KR)
(74) Representative: Viering, Jentschura & Partner mbB Patent- und Rechtsanwälte

(56) References cited:
- US-A1- 2005 030 303
- US-A1- 2006 071 893
- US-A1- 2013 285 998
- US-A1- 2015 255 042
- US-A1- 2019 197 979

## Description

### BACKGROUND OF THE INVENTION

### Field of the Invention

The present invention relates to a light emitting display device and a driving method of the same. Discussion of the Related Art

In accordance with advances in information technology, the market for a display device which is a connection medium between a user and information is expanding. Accordingly, use of a display device such as a light emitting display device (LED), a quantum dot display device (QDD), a liquid crystal display device (LCD), etc. is increasing.

The above-mentioned display devices include a display panel including sub-pixels, a driver configured to output a drive signal for driving of the display panel, a power supply configured to generate power to be supplied to the display panel or the driver, etc.

In such display devices, when a drive signal, for example, a scan signal and a data signal, is supplied to the sub-pixels formed at the display panel, selected ones of the sub-pixels transmit light therethrough or directly emit light and, as such, an image may be displayed.

US 2015/255042 A1 discloses a display device and a source driver. The source driver includes a shift register for providing latch up pulses to a latch connected to the shift register. The source driver is configured to set a period in which current consumption can be reduced and to prevent unnecessary current consumption by performing a power down mode in this period. US 2019/197979 A1 discloses a display device capable of reducing power consumption. The display device includes a timing controller which compares the pixel data received from the system in horizontal units. If it is determined that lines having the same pixel data as a previous horizontal line are successively input, the timing controller transmits the pixel data of the first line among the lines having the same data to the data driver and stops transmitting data for the other lines, thereby operating in a low power mode. US 2006/071893 A1 discloses a source driver which includes a driving mode setting register which sets a first or a second driving mode. US 2013/285998 A1 discloses an LCD device including a timing controller and a source driver. A transfer of digital image data is performed simultaneously from a first latch to a second latch of the source driver according to a latch signal. To avoid a disturbance of the transfer, a timely correspondence is arranged, such that the latch signal is outputted during a blanc time of a horizontal sync signal.
US 2005/0030303 A1 discloses a display driver including a shift register and a shift register control circuit. The shift register control circuit supplies a shift clock to the shift register in a vertical scan period to cause the shift register to fetch display data for one horizontal scan, then halts the supply of the shift clock.

### SUMMARY OF THE INVENTION

Accordingly, the present disclosure is directed to a light emitting display device and a driving method of the same that substantially obviate one or more problems due to limitations and disadvantages of the related art.

An object of the present invention is to provide a light emitting display device and a driving method thereof which are capable of eliminating a problem caused by power noise (latch failure, screen flickering, etc.), thereby achieving an enhancement in display quality and an enhancement in driving reliability and driving stability.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a light emitting display device includes the features according to claim 1. Additional features for advantageous embodiments of the present invention are provided in the dependent claims thereto.

In another aspect of the present invention, a method for driving a light emitting display device according to claim 6 is provided.

In accordance with the present invention, there is an effect capable of eliminating a problem caused by power noise (latch failure, screen flickering, etc.), thereby achieving an enhancement in display quality. In accordance with the present invention, there is an effect capable of preventing output abnormality of an amplifier, an increase in blank period, an increase in transmission frequency (or an increase in transmission bandwidth), etc., thereby achieving an enhancement in driving reliability and driving stability.

### BRIEF DESCRIPTION OF THE DRAWINGS

The accompanying drawings, which are included to provide a further understanding of the invention and are incorporated in and constitute a part of this application, illustrate embodiment (s) of the invention and along with the description serve to explain the principle of the invention. In the drawings:
FIG. 1 is a block diagram schematically showing a light emitting display device;
FIG. 2 is a configuration diagram schematically showing a sub-pixel shown in FIG. 1;
FIGs. 3A and 3B are views showing disposition examples of gate-in-panel type gate drivers;
FIGs. 4 and 5 are block diagrams illustrating configurations of devices associated with a gate-in-panel type gate driver;
FIG. 6 is a diagram schematically showing internal blocks of a data driver connected to a timing controller;
FIG. 7 is a diagram briefly explaining a data transfer mode between a timing controller and a data driver;
FIG. 8 is a diagram explaining a problem caused by power noise;
FIGs. 9 and 10 are diagrams explaining experimental examples for solving a problem caused by power noise;
FIG. 11 is a diagram briefly explaining a latch hold method according to a first embodiment of the present invention;
FIG. 12 is a diagram more concretely explaining the latch hold method according to the first embodiment of the present invention;
FIG. 13 is a diagram briefly explaining a latch hold method according to a second embodiment of the present invention;
FIG. 14 is a diagram briefly explaining a latch hold method according to a first variant of the second embodiment of the present invention;
FIG. 15 is a diagram briefly explaining a latch hold method according to a second variant of the second embodiment of the present invention;
FIG. 16 is a diagram showing internal blocks of a data driver according to a third embodiment of the present invention;
FIG. 17 is a diagram explaining a method for controlling a latch hold signal in accordance with the third embodiment of the present invention;
FIGs. 18 and 19 are diagrams explaining a configuration of a part of the internal blocks of the data driver and a variation according to latch hold in the third embodiment of the present invention;
FIGs. 20 and 21 are diagrams briefly comparing an experimental example and the third embodiment of the present invention with each other and briefly explaining a difference therebetween;
FIG. 22 is a diagram explaining a control method of a latch hold signal according to a fourth embodiment of the present invention; and
FIG. 23 is a diagram explaining a part of configurations of internal blocks of a data driver according to the fourth embodiment of the present invention.

### DETAILED DESCRIPTION OF THE INVENTION

A display device according to the present invention may be embodied as a television, an image player, a personal computer (PC), a home theater, a car electric device, a smartphone, etc., without being limited thereto. The display device according to the present invention may be embodied as a light emitting display device (LED), a quantum dot display device (QDD), a liquid crystal display device (LCD), etc. For convenience of description, however, the following description will be given in conjunction with an example in which the display device according to the present invention is a light emitting display device configured to directly emit light based on an inorganic light emitting diode or an organic light emitting diode.

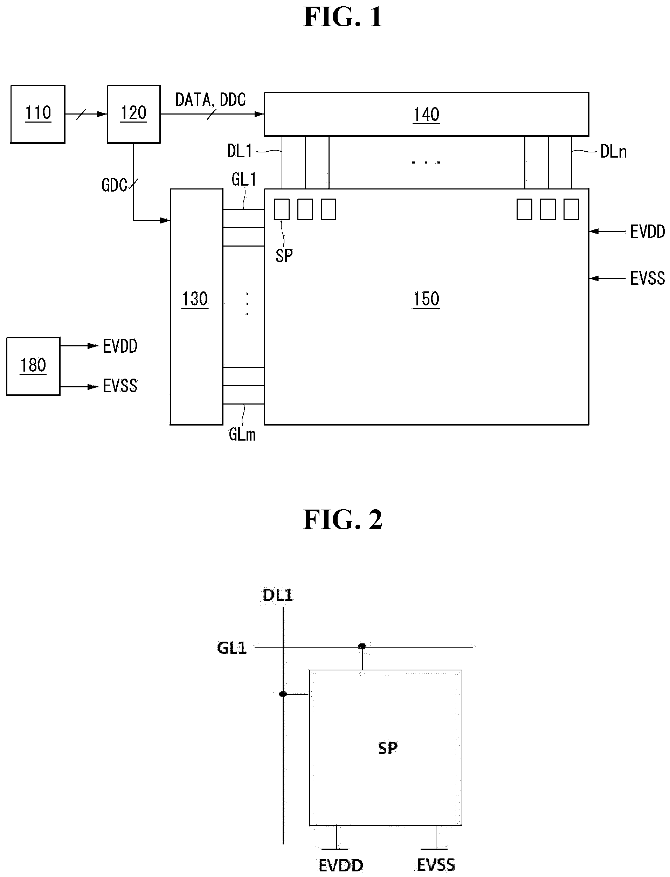

FIG. 1 is a block diagram schematically showing a light emitting display device. FIG. 2 is a configuration diagram schematically showing a sub-pixel shown in FIG. 1.

As shown in FIGs. 1 and 2, the light emitting display device includes a timing controller 120, a data driver 140 and a display panel 150, and may include an image supplier 110, a gate driver 130 and a power supply 180.

The image supplier 110 (a set or a host system) may output various drive signals as well as an image data signal supplied from an exterior thereof or an image data signal stored in an internal memory. The image supplier 110 may supply the data signal and the various drive signals to the timing controller 120.

The timing controller 120 may output a gate timing control signal GDC for control of operation timing of the gate driver 130, a data timing control signal DDC for control of operation timing of the data driver 140, various synchronization signals (a vertical synchronization signal Vsync and a horizontal synchronization signal Hsync), etc. The timing controller 120 may supply, to the data driver 140, a data signal DATA supplied from the image supplier 110, together with the data timing control signal DDC. The timing controller 120 may be formed in the form of an integrated circuit (IC) and, as such, may be mounted on a printed circuit board, without being limited thereto.

The gate driver 130 may output a gate signal (or a scan signal) in response to the gate timing control signal GDC, etc. supplied from the timing controller 120. The gate driver 130 may supply a gate signal to sub-pixels included in the display panel 150 via gate lines GL1 to GLm. The gate driver 130 may be formed in the form of an IC or may be directly formed on the display panel 150 in the form of a gate-in-panel structure, without being limited thereto.

The data driver 140 may sample and latch the data signal DATA in response to the data timing control signal DDC, etc. supplied from the timing controller 120, may convert a data signal having a digital form into a data voltage having an analog form, and may then output the resultant data voltage. The data driver 140 supplies the data voltage to the sub-pixels included in the display panel 150 via data lines DL1 to DLn. The data driver 140 may be formed in the form of an IC and, as such, may be mounted on the display panel 150 or a printed circuit board, without being limited thereto.

The power supply 180 may generate first power of a high level and second power of a low level based on an external input voltage supplied from an exterior thereof, and may output the first power and the second power through a first power line EVDD and a second power line EVSS. The power supply 180 may generate and output not only the first power and the second power, but also a voltage required for driving of the gate driver 130 (for example, a gate voltage including a gate-high voltage and a gate-low voltage) or a voltage required for driving of the data driver 140 (a drain voltage and a drain voltage including a half-drain voltage).

The display panel 150 displays an image, corresponding to the gate signal, the drive signal including the data voltage, the first power, the second power, etc. The sub-pixels of the display panel 150 directly emit light. The display panel 150 may be manufactured based on a substrate having stiffness or ductility, such as glass, silicon, polyimide, or the like. The sub-pixels, which emit light, may be constituted by a pixel including red, green and blue or a pixel including red, green, blue and white.

For example, one sub-pixel SP may be connected to the first data line DL1, the first gate line GL1, the first power line EVDD, and the second power line EVSS, and may include a pixel circuit constituted by a switching transistor, a driving transistor, a capacitor, an organic light emitting diode, etc. The sub-pixel SP used in the light emitting display device directly emits light and, as such, the circuit configuration thereof is complex. In addition, a compensation circuit configured to compensate for degradation of not only the organic light emitting diode, but also the driving transistor configured to supply drive current to the organic light emitting diode, etc. is also diverse. However, in FIG. 2, the sub-pixel SP is simply shown in the form of a block.

Meanwhile, in the above description, the timing controller 120, the gate driver 130, the data driver 140, etc. have been described as being individual configurations, respectively. However, one or more of the timing controller 120, the gate driver 130, and the data driver 140 may be integrated into one IC in accordance with an implementation type of the light emitting display device.

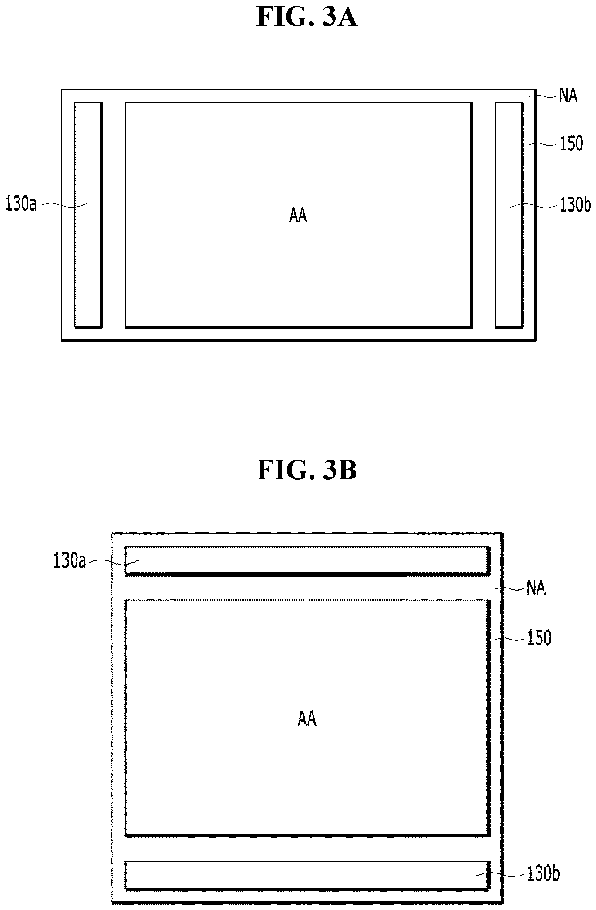

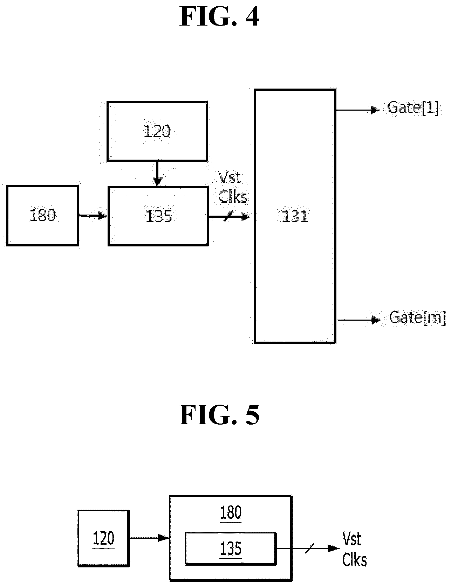

FIGs. 3A and 3B are views showing disposition examples of gate-in-panel type gate drivers. FIGs. 4 and 5 are block diagrams illustrating configurations of devices associated with a gate-in-panel type gate driver.

As shown in FIGs. 3A and 3B, gate-in-panel type gate drivers 130a and 130b are disposed in a non-display area NA of a display panel 150. As shown in FIG. 3A, the gate drivers 130a and 130b may be disposed at left and right non-display areas NA of the display panel 150, respectively. Alternatively, as shown in FIG. 3B, the gate drivers 130a and 130b may be disposed at upper and lower non-display areas NA of the display panel 150, respectively.

Although the gate drivers 130a and 130b have been illustrated and described in conjunction with examples in which the gate drivers 130a and 130b are disposed in the non-display areas NA disposed at left and right sides or upper and lower sides of the display area AA, only one gate driver may be disposed at the left, right, upper or lower non-display area NA.

As shown in FIG. 4, the gate-in-panel type gate driver may include a shift register 131 and a level shifter 135. The level shifter 135 may generate clock signals Clks and a start signal Vst based on signals and voltages output from a timing controller 120 and a power supply 180. The clock signals Clks may be generated in the form of a K-phase having K different phases (K being an integer of 2 or greater) such as 2-phase, 4-phase, 8-phase, etc.)

The shift register 131 may operate based on the signals Clks and Vst, etc. output from the level shifter 135, and may output gate signals Gate[1] to Gate[m] for turning on or off transistors formed at a display panel. The shift register 131 may be formed on the display panel in the form of a thin film in accordance with a gate-in-panel method. Accordingly, "130a" and "130b" in FIGs. 3A and 3B may correspond to the shift register 131.

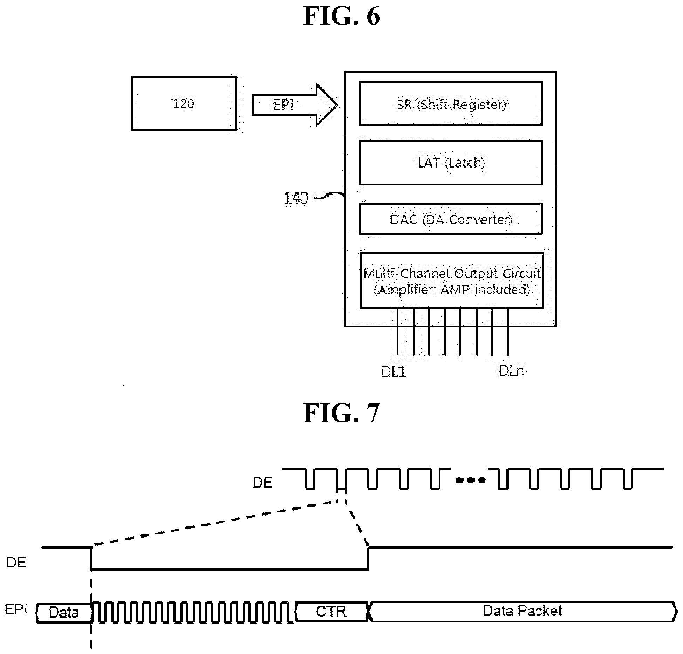

As shown in FIGs. 4 and 5, the level shifter 135 may be independently formed in the form of an IC, differently from the shift register 131, or may be included in a power supply 180. Of course, these configurations are only illustrative, and the present invention is not limited thereto. FIG. 6 is a diagram schematically showing internal blocks of a data driver connected to a timing controller. FIG. 7 is a diagram briefly explaining a data transfer mode between a timing controller and a data driver.

As shown in FIGs. 6 and 7, a timing controller 120 and a data driver 140 may receive and transmit various signals through an embedded clock point-to-point interface (EPI) EPI (simply referred to as an EPI interface EPI") based on an embedded clock scheme.

The various signals transferred through the EPI interface EPI may include a control packet CTR including control signals for controlling the data driver 140, a data packet including data signals to be applied to a display panel, a data enable signal DE defining an input period of a data signal of one line, etc. Meanwhile, the data driver 140 may generate the data enable signal DE based on a control signal included in the control packet CTR by itself.

The data driver 140 includes a shift register SR, a latch LAT, a DA converter DAC, a multi-channel output circuit, etc. The shift register SR, the latch LAT, the DA converter DAC, and the multi-channel output circuit may perform a function for converting a data signal to be applied to the display panel into a data voltage, based on various signals included in the control packet CTR and the data packet transferred via the EPI interface EPI, and other functions. Meanwhile, the internal blocks of the data driver 140 briefly shown in FIG. 6 are only illustrative and, as such, the present invention is not limited thereto.

Meanwhile, the data driver 140 may generate power noise during output operation of an internal device thereof (for example, upon data voltage output of an amplifier AMP included in the multi-channel output circuit). Hereinafter, a scheme for eliminating a problem caused by power noise in accordance with an embodiment of the present invention will be described.

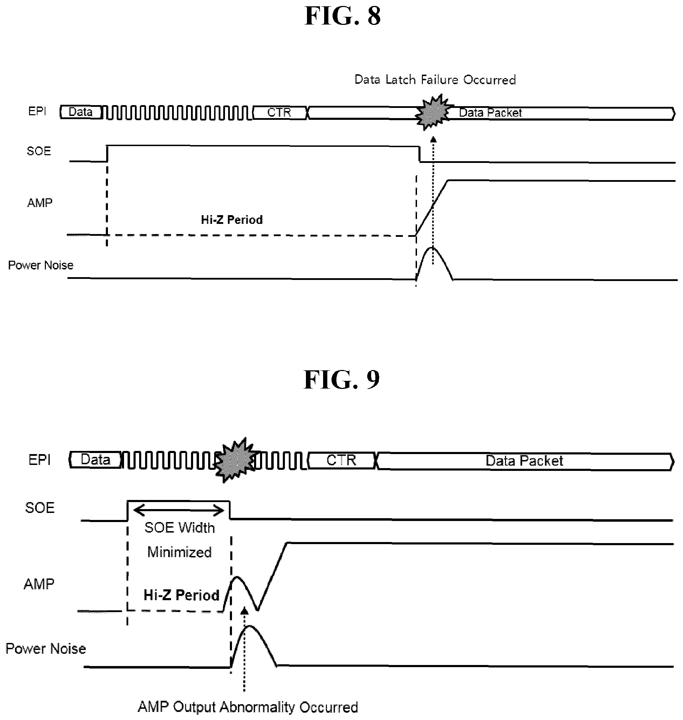

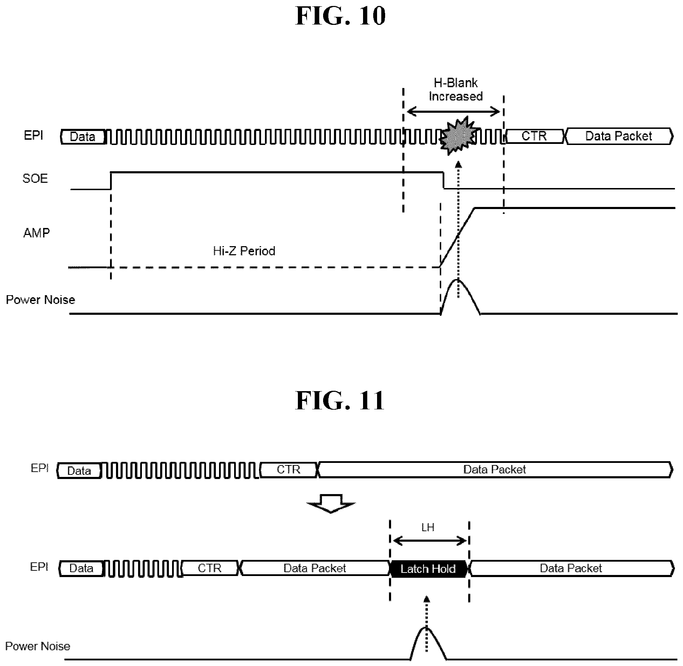

FIG. 8 is a diagram explaining a problem caused by power noise. FIGs. 9 and 10 are diagrams explaining experimental examples for solving a problem caused by power noise.

As shown in FIGs. 6 and 8, when a source output enable signal SOE switches from a logic high level to a logic low level, an output operation of the amplifier AMP included in the multi-channel output circuit may be performed for output of a data voltage. That is, the source output enable signal SOE is a signal for activating output of the data driver 140 (an output operation of the amplifier AMP) (a signal allowing output of the data voltage).

A plurality of amplifiers AMP respectively configured to output data voltages via a plurality of data lines DL1 to DLn is included in the multi-channel output circuit. However, when the plurality of amplifiers AMP performs an output operation for output of data voltages, power noise may be generated within the data driver 140.

There is a higher power noise generation possibility in an output period in which output of the amplifier AMP is performed than in an high impedance period (Hi-Z period) in which output of the amplifier AMP is not performed.

As such, when the latch LAT operates in a state in which power noise is generated within the data driver 140, data latching for reception of a data packet (or a data signal) may not be normally carried out, but may be abnormally carried out. That is, when the latch LAT operates in a state in which power noise is generated, there may be a high possibility that data latch failure (failure causing screen flickering during high frequency transmission) occurs.

In a first experimental example of FIG. 9, the width of a source output enable signal SOE (SOE width) is minimized in order to prevent occurrence of data latch failure. In a second experimental example of FIG. 10, a horizontal blank (H-blank) period is increased corresponding to a time when power noise is generated, in order to prevent occurrence of data latch failure.

It was found that, when the width of the source output enable signal SOE (SOE width) is minimized, as in the first experimental example of FIG. 9, noise may be generated at the DA converter and, as such, output abnormality of the amplifier AMP may occur.

On the other hand, it was found that, when the horizontal blank (H-blank) period is increased, as in the second experimental example of FIG. 10, power noise may be generated during a period in which clock training is carried out and, as such, data latch failure may be prevented.

However, the method of the second experimental example may have another problem of an increase in transmission frequency (or an increase in transmission bandwidth), etc. due to an increase in horizontal blank (H-blank) period. To this end, the following embodiments are proposed.

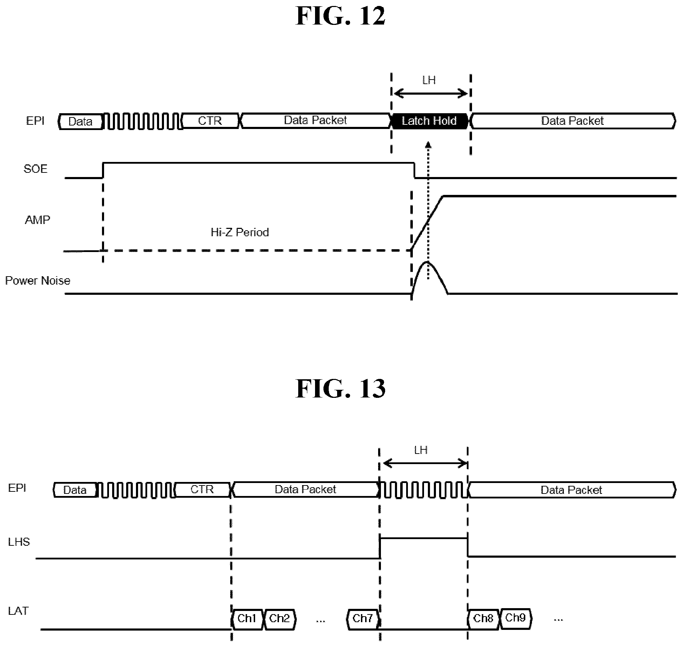

FIG. 11 is a diagram briefly explaining a latch hold method according to a first embodiment of the present invention. FIG. 12 is a diagram more concretely explaining the latch hold method according to the first embodiment of the present invention.

As shown in FIG. 11, in accordance with the first embodiment of the present invention, the latch has a latch hold (LH) period in which a data latch operation is paused corresponding to a power noise generation time.

Preferably, latch hold LH occurs in a period in which a data packet including data signals is transmitted, rather than in a period in which a control packet CTR including control signals is transmitted, in order to maintain stable operation of the device.

As shown in FIG. 12, there is a higher power noise generation possibility in an output period in which output of the amplifier AMP is performed than in a high impedance period (Hi-Z period) in which output of the amplifier AMP is not performed.

Accordingly, latch hold LH occurs corresponding to a period in which the source output enable signal SOE switches from a logic high level to a logic low level. In addition, in order to achieve a stable latch hold (LH) operation, latch hold LH may occur immediately before the source output enable signal SOE falls from a logic high level to a logic low level, and may be ended after a predetermined time elapses from disappearance of power noise.

In accordance with the first embodiment of the present invention, it may be possible to not only eliminate a problem caused by power noise (latch failure), but also to prevent occurrence of other problems possibly occurring in the experimental example, such as output abnormality of the amplifier AMP or an increase in transmission frequency (or an increase in transmission bandwidth) caused by an increased blank period.

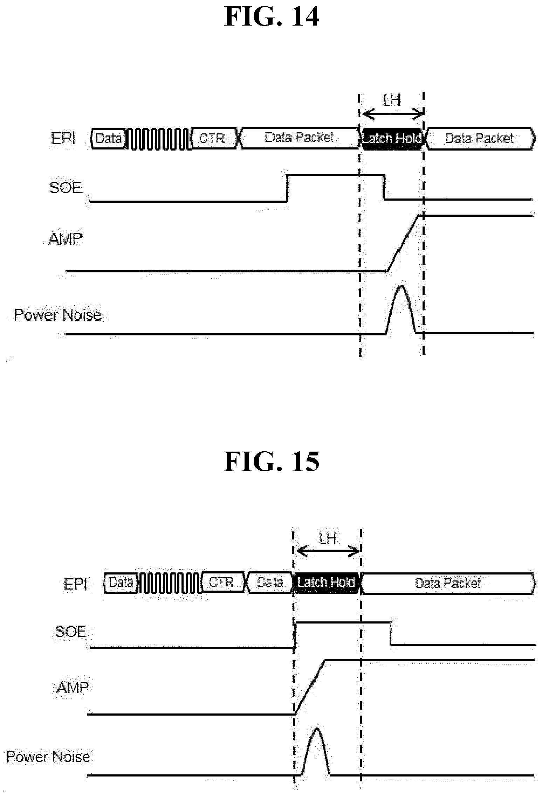

FIG. 13 is a diagram briefly explaining a latch hold method according to a second embodiment of the present invention. FIG. 14 is a diagram briefly explaining a latch hold method according to a first variant of the second embodiment of the present invention. FIG. 15 is a diagram briefly explaining a latch hold method according to a second variant of the second embodiment of the present invention.

As shown in FIG. 13, in accordance with the second embodiment of the present invention, a latch hold (LH) operation may be carried out corresponding to a time when power noise is generated. The latch hold (LH) operation may be carried out based on an artificially-generated latch hold signal LHS.

A timing controller or a data driver may each recognize a time when a data voltage causing power noise is output, based on operation timing of a device and the device related thereto, respectively. Accordingly, the latch hold signal LHS is be applied to the data driver after being generated from the timing controller, or is generated within the data driver itself.

A latch LAT included in the data driver may receive data signals included in a data packet on a channel basis in accordance with a data latch operation. However, when a latch hold signal LHS is generated with a logic high level, the latch LAT included in the data driver may pause the data latch operation for a logic-high period of the latch hold signal LHS. When a latch hold signal LHS is subsequently generated a logic low level, the data latch operation may restart.

As such, the data signals included in the data packet may be transmitted in such a manner that first to seventh channel data Ch1 to Ch7 are input, and eighth and ninth channel data Ch8 and Ch9 are subsequently input after pause of data input by a latch hold (LH) operation.

As shown in FIG. 14, in accordance with the first variant of the second embodiment of the present invention, a latch hold (LH) operation may occur when a source output enable signal SOE switches from a logic high level to a logic low level. That is, the latch hold (LH) operation may occur around a time when the source output enable signal SOE falls to the logic low level (a falling time of the signal SOE).

As shown in FIG. 15, in accordance with the second variant of the second embodiment of the present invention, a latch hold (LH) operation may occur when a source output enable signal SOE rises from a logic low level to a logic high level. That is, latch hold LH may occur around a time when the source output enable signal SOE rises to the logic high level (a rising time of the source output enable signal SOE) (or may occur in synchronism with the rising time of the signal SOE).

As can be seen from FIGs. 14 and 15, an amplifier AMP may be embodied to generate an output when the source output enable signal SOE falls to a logic low level or may be embodied to generate an output when the source output enable signal SOE rises to a logic high level. Thus, the latch hold (LH) operation may be controlled to occur at a power noise generation time, an output time of the amplifier AMP or to occur at a time determined taking both the times into consideration.

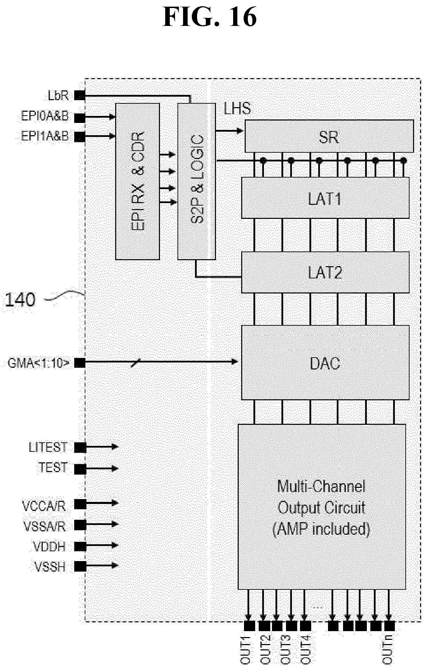

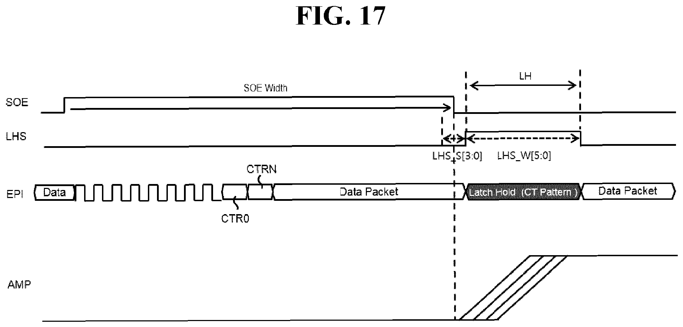

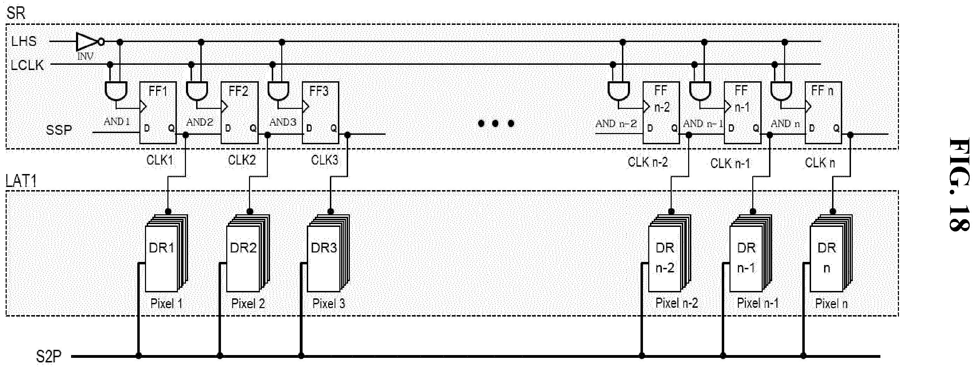

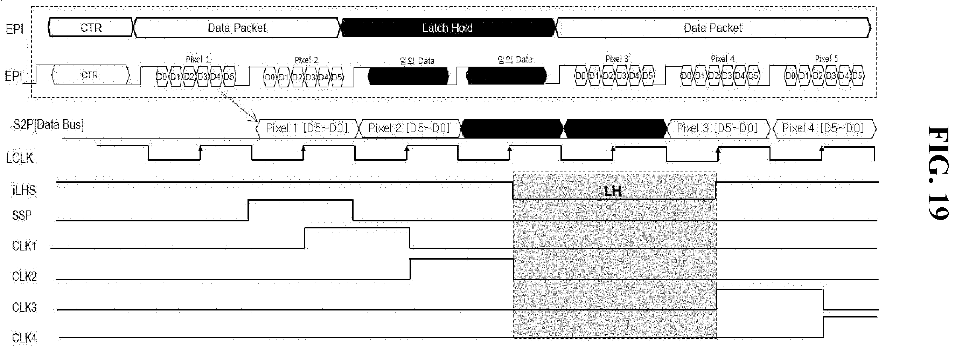

FIG. 16 is a diagram showing internal blocks of a data driver according to a third embodiment of the present invention. FIG. 17 is a diagram explaining a method for controlling a latch hold signal in accordance with the third embodiment of the present invention. FIGs. 18 and 19 are diagrams explaining a configuration of a part of the internal blocks of the data driver and a variation according to latch hold in the third embodiment of the present invention.

As shown in FIG. 16, in accordance with the third embodiment of the present invention, a data driver 140 may include an interface unit EPI RX & CDR, a logic circuit unit S2P & LOGIC, a shift register SR, a first latch LAT1, a second latch LAT2, a DA converter DAC, a multi-channel output circuit, etc.

The interface unit EPI RX & CDR may include communication terminals EPI0A&B and EPI1A&B, etc. for data communication with a timing controller. The logic circuit unit S2P & LOGIC may include a selection terminal LbR for selection of a latch direction.

The interface unit EPI RX & CDR may receive data via an EPI interface coupled to the timing controller, and may separate the data into control signals and data signals in forms usable in internal devices.

The logic circuit unit S2P & LOGIC may output data signals as well as control signals for control of the shift register SR, the first latch LAT1, the second latch LAT2, the DA converter DAC, the multi-channel output circuit, etc., based on the control signals transferred via the interface unit EPI RX & CDR. In addition, the logic circuit unit S2P & LOGIC may transfer, to the shift register SR, a latch hold signal LHS provided based on signals transferred thereto via the EPI interface.

In addition, the data driver 140 may include a gamma voltage terminal GMA<1:10> for reception of a gamma voltage to be provided to the DA converter DAC, test terminals LITEST and TEST for testing of operations of the internal devices, voltage terminals VCCA/R, VSSA/R, VDDH and VSSH for reception of operating voltages of the internal devices, and output terminals OUT1 to OUTn.

As shown in FIG. 17, in accordance with the third embodiment of the present invention, the latch hold signal LHS may be generated around a time when a source output enable signal falls to a logic low level (a falling time of the source output enable signal SOE). In addition, when the latch hold signal LHS is generated with a logic high level, a latch hold (LH) operation may be carried out.

The latch hold signal LHS may be generated before or after a time when the source output enable signal falls from a logic high level to a logic low level (a falling edge of the signal) with reference to the entire width thereof (SOE width). The generation time of the latch hold signal LHS, that is, LHS_S[3:0], may become earlier or later in accordance with a data bit value. In addition, the width of the latch hold signal LHS, that is, LHS_W[5:0] may become wider or narrower in accordance with the data bit value. Furthermore, a clock training pattern CT Pattern may be generated in place of a data packet during a latch hold (LH) period in which the latch hold signal LHS is generated with a logic high level.

As shown in FIGs. 18 and 19, the shift register SR according to the third embodiment of the present invention may include an inverter INV, first to n-th flip-flops FF1 to FFn, first to n-th AND gates AND1 to ANDn, etc. The first to n-th flip-flops FF1 to FFn may each be embodied as a D flip-flop capable of shifting a signal, corresponding to a clock signal applied to a clock terminal thereof, and outputting the shifted signal.

The first to n-th flip-flops FF1 to FFn may be dependently interconnected such that an output from a data output terminal Q of one stage is applied to a data input terminal D of a next stage. Of course, the first flip-flop FF1 disposed at an uppermost stage may receive a signal, such as a source start pulse SSP, from the exterior. The first to n-th flip-flops FF1 to FFn may be connected to the first to n-th AND gates AND1 to ANDn, respectively, such that outputs from output terminals of the AND gates AND1 to ANDn are applied to clock terminals of the flip-flops FF1 to FFn, respectively.

The first latch LAT1 according to the third embodiment of the present invention may include first to n-th data registers DR1 to DRn, etc. The first to n-th data registers DR1 to DRn may each be connected to a data bus S2P[Data Bus] at an input terminal thereof. The first to n-th data registers DR1 to DRn may also be connected to the output terminals Q of the first to n-th flip-flops FF1 to FFn at clock terminals thereof, respectively.

The first to n-th data registers DR1 to DRn may store, on a pixel basis (on a one-line basis), a data signal transferred thereto via the data bus S2P[Data Bus], corresponding to first to n-th clock signals CLK1 to CLKn output from the output terminals Q of the first to n-th flip-flops FF1 to FFn, respectively. In accordance with operation of the first to n-th data registers DR1 to DRn, data signals transferred in a serial form may be converted into data signals in a parallel form.

Hereinafter, a part of configurations included in the shift register SR and the first latch LAT1 will be described in conjunction with, for example, connection and operation relations thereof. Of course, no description of the remaining configurations included in the shift register SR and the first latch LAT1 will be given because the remaining configurations have the same connection and operation relations as the configuration part to be described hereinafter.

The first flip-flop FF1 may be connected, at the data input terminal D thereof, to a source start pulse line transferring a source start pulse SSP while being connected, at the data output terminal Q thereof, to the data input terminal D of the second flip-flop FF2. The first AND gate AND1 may be connected, at a first input terminal thereof, to a shift clock signal line transferring a shift clock signal LCLK and may be connected, at a second input terminal thereof, to an output terminal of the inverter INV outputting a latch hold signal LHS in an inverted state while being connected, at an output terminal thereof, to the clock terminal of the first flip-flop FF1.

The first flip-flop FF1 may output a first clock signal CLK1 of a logic high level, corresponding to a shift clock signal LCLK of a logic high level (a rising time of the shift clock signal LCLK) generated during a period in which the source start pulse SSP is maintained at a logic high level. The first data register DR1 may store data signals D0 to D5 of a first pixel Pixel1 transferred via the data bus S2P[Data Bus] based on the first clock signal CLK1 output from the first flip-flop FF1.

The second flip-flop FF2 may be connected, at the data input terminal D thereof, to the data output terminal Q of the first flip-flop FF1 while being connected, at the data output terminal Q thereof, to the data input terminal D of the third flip-flop FF3. The second AND gate AND2 may be connected, at a first input terminal thereof, to the shift clock signal line transferring the shift clock signal LCLK and may be connected, at a second input terminal thereof, to the output terminal of the inverter INV outputting the latch hold signal LHS in an inverted state while being connected, at an output terminal thereof, to the clock terminal of the second flip-flop FF2.

The second flip-flop FF2 may output a second clock signal CLK2 of a logic high level, corresponding to the first clock signal CLK1 of a logic high level (a falling time of the first clock signal CLK1) applied during the period in which the source start pulse SSP is maintained at a logic high level. The second data register DR2 may store data signals D0 to D5 of a second pixel Pixel2 transferred thereto via the data bus S2P[Data Bus] based on the second clock signal CLK2 output from the second flip-flop FF2.

A latch hold signal LHS of a logic low level shown in FIG. 17 is converted into a latch hold signal iLHS of a logic high level, as shown in FIG. 19, as the latch hold signal LHS passes through the inverter INV, and, as such, the latch hold signal iLHS of the logic high level is output. On the other hand, a latch hold signal LHS of a logic high level shown in FIG. 17 is converted into a latch hold signal iLHS of a logic low level, as shown in FIG. 19, as the latch hold signal LHS passes through the inverter INV, and, as such, the latch hold signal iLHS of the logic low level is output.

Accordingly, the above-described operation is enabled until the latch hold signal LHS transferred to the input terminal of the inverter INV is applied with a logic low level. On the other hand, when the latch hold signal iLHS of the logic low level is generated by the inverter INV, the first to n-th AND gates AND1 to ANDn do not output 1, but output 0. This is because an AND gate multiplies inputs of both input terminals thereof, thereby generates an output (a logical product) and, as such, outputs 0 when a logic low value or 0 is input to one of the input terminals. As a result, the first to n-th flip-flops FF1 to FFn output clock signals of a low logic level, in place of clock signals of a logic high level, during the latch hold (LH) period in which the latch hold signal iLHS of the low logic level is output.

FIG. 19 shows, as an example, that a third clock signal CLK3 is output after delay of a predetermined time by a latch hold (LH) operation after a second clock signal CLK2 is output. Meanwhile, as can be seen from FIG. 19, although a certain data signal (certain data) may be generated during the latch hold (LH) period, the data signal is not stored in the data register because a clock signal of a logic high level has not been generated.

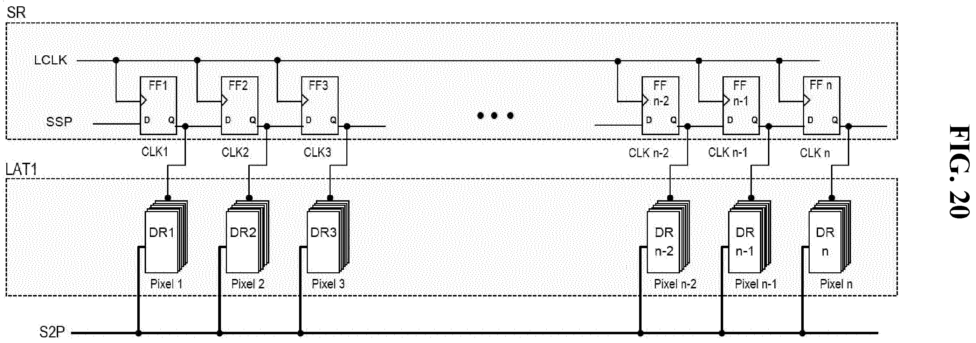

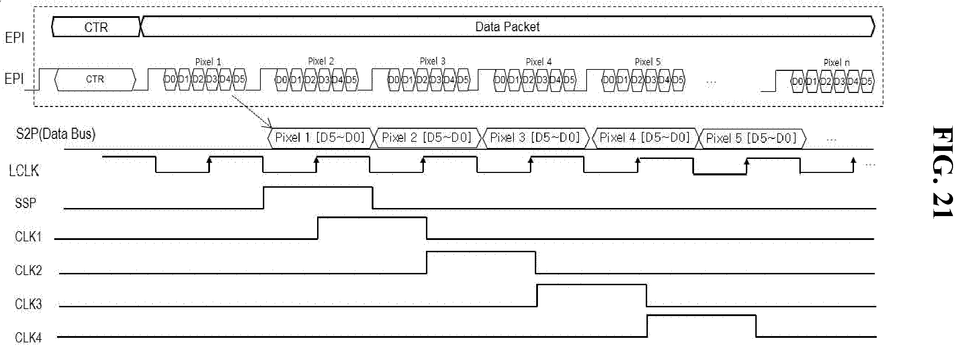

FIGs. 20 and 21 are diagrams briefly comparing an experimental example and the third embodiment of the present invention with each other and briefly explaining a difference therebetween.

As shown in FIGs. 20 and 21, a shift register SR according to the experimental example may include first to n-th flip-flops FF1 to FFn, etc. In addition, a first latch LAT1 according to the experimental example may include first to n-th data registers DR1 to DRn, etc.

A latch hold signal is not applied to the structure according to the experimental example. For this reason, it is difficult to eliminate problems caused by power noise because the latch hold signal LHS is not applied, and the latch hold (LH) operation based on the latch hold signal LHS is not carried out. As such, when power noise is generated, there may be a high possibility that data latch failure described with reference to FIG. 8 occurs.

Hereinafter, a fourth embodiment of the present invention will be described. The following description will be given mainly in conjunction with a configuration different from that of the third embodiment.

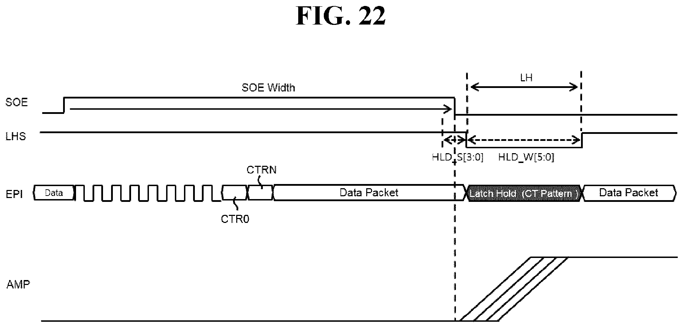

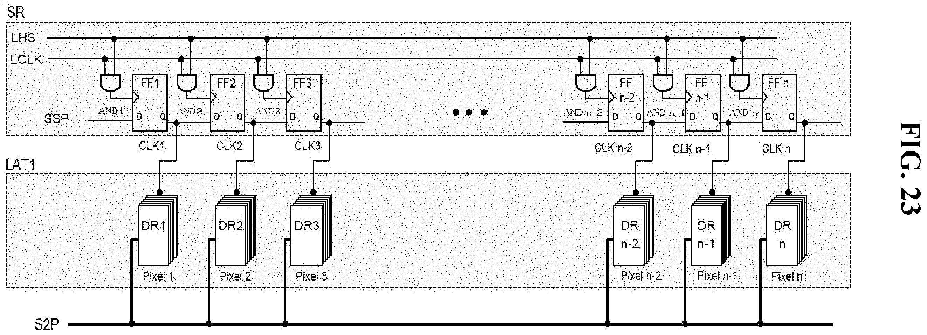

FIG. 22 is a diagram explaining a control method of a latch hold signal according to the fourth embodiment of the present invention. FIG. 23 is a diagram explaining a part of configurations of internal blocks of a data driver according to the fourth embodiment of the present invention.

As shown in FIG. 22, in accordance with the fourth embodiment of the present invention, a latch hold signal LHS may be generated around a time when a source output enable signal SOE falls to a logic low level (a falling time of the signal SOE). In addition, when the latch hold signal LHS is generated with a low logic level, a latch hold (LH) operation may be carried out. That is, a latch hold (LH) operation may be carried out by the latch hold signal LHS generated in a form inverted from that of the third embodiment.

As shown in FIG. 23, a shift register SR according to the fourth embodiment of the present invention may include first to n-th flip-flops FF1 to FFn, first to n-th AND gates AND1 to ANDn, etc. In the fourth embodiment of the present invention, no inverter is included in a clock terminal of the shift register SR, differently from the third embodiment.

The first to n-th flip-flops FF1 to FFn may be dependently interconnected such that an output from a data output terminal Q of one stage is applied to a data input terminal D of a next stage. Of course, the first flip-flop FF1 disposed at an uppermost stage may receive a signal, such as a source start pulse SSP, from an exterior. The first to n-th flip-flops FF1 to FFn may be connected to the first to n-th AND gates AND1 to ANDn, respectively, such that outputs from output terminals of the AND gates AND1 to ANDn are applied to clock terminals of the flip-flops FF1 to FFn, respectively.

A first latch LAT1 according to the fourth embodiment of the present invention may include first to n-th data registers DR1 to DRn, etc. The first to n-th data registers DR1 to DRn may each be connected to a data bus S2P[Data Bus] at an input terminal thereof. The first to n-th data registers DR1 to DRn may also be connected to the output terminals of the first to n-th flip-flops FF1 to FFn at clock terminals thereof, respectively.

The first to n-th data registers DR1 to DRn may store, on a pixel basis (on a one-line basis), a data signal transferred thereto via the data bus S2P[Data Bus], corresponding to first to n-th clock signals CLK1 to CLKn output from the output terminals Q of the first to n-th flip-flops FF1 to FFn, respectively. In accordance with operation of the first to n-th data registers DR1 to DRn, data signals transferred in a serial form may be converted into data signals in a parallel form.

Hereinafter, a part of configurations included in the shift register SR and the first latch LAT1 will be described in conjunction with, for example, connection and operation relations thereof. Of course, no description of the remaining configurations included in the shift register SR and the first latch LAT1 will be given because the remaining configurations have the same connection and operation relations as the configuration part to be described hereinafter.

The first flip-flop FF1 may be connected, at the data input terminal D thereof, to a source start pulse line transferring a source start pulse SSP while being connected, at the data output terminal Q thereof, to the data input terminal D of the second flip-flop FF2. The first AND gate AND1 may be connected, at a first input terminal thereof, to a shift clock signal line transferring a shift clock signal LCLK and may be connected, at a second input terminal thereof, to a latch hold signal line transferring a latch hold signal LHS while being connected, at an output terminal thereof, to the clock terminal of the first flip-flop FF1.

The first flip-flop FF1 may output a first clock signal CLK1 of a logic high level, corresponding to a shift clock signal LCLK of a logic high level (a rising time of the shift clock signal LCLK) generated during a period in which the source start pulse SSP is maintained at a logic high level. The first data register DR1 may store a data signal of a first pixel Pixel1 transferred via the data bus S2P[Data Bus] based on the first clock signal CLK1 output from the first flip-flop FF1.

The second flip-flop FF2 may be connected, at the data input terminal D thereof, to the data output terminal Q of the first flip-flop FF1 while being connected, at the data output terminal Q thereof, to the data input terminal D of the third flip-flop FF3. The second AND gate AND2 may be connected, at a first input terminal thereof, to the shift clock signal line transferring the shift clock signal LCLK and may be connected, at a second input terminal thereof, to the latch hold signal line transferring the latch hold signal LHS while being connected, at an output terminal thereof, to the clock terminal of the second flip-flop FF2.

The second flip-flop FF2 may output a second clock signal CLK2 of a logic high level, corresponding to the first clock signal CLK1 of a logic high level (a falling time of the first clock signal CLK1) applied during the period in which the source start pulse SSP is maintained at a logic high level. The second data register DR2 may store a data signal of a second pixel Pixel2 transferred thereto via the data bus S2P[Data Bus] based on the second clock signal CLK2 output from the second flip-flop FF2.

As can be seen from FIGs. 22 and 23, the first to n-th AND gates AND1 to ANDn do not output 1, but output 0, when a latch hold signal LHS of a logic low level is applied thereto. As a result, the first to n-th flip-flops FF1 to FFn output clock signals of a low logic level, in place of clock signals of a logic high level, during a latch hold (LH) period in which the latch hold signal LHS of the low logic level is output.

As apparent from the above description, in accordance with the present invention, there is an effect capable of eliminating a problem caused by power noise (latch failure, screen flickering, etc.), thereby achieving an enhancement in display quality. In accordance with the present invention, there is an effect capable of preventing output abnormality of an amplifier, an increase in blank period, an increase in transmission frequency (or an increase in transmission bandwidth), etc., thereby achieving an enhancement in driving reliability and driving stability.

The foregoing descriptions and the accompanying drawings have been presented in order to illustratively explain technical ideas of the present invention. It should be understood that the scope of the present invention shall be defined by the appended claims

## Claims

1. A light emitting display device comprising:
a display panel (150) configured to display an image;
a data driver (140) configured to supply a data voltage to the display panel (150); and
a timing controller (120) configured to control the data driver (140);
wherein the data driver (140) comprises a shift register (131, SR) and a data latch (LAT) connected thereto,
the data latch (LAT) including first to n-th data registers (DR1, ..., DRn) each connected at a data input terminal thereof to a data bus (S2P) and at a clock terminal thereof to an output terminal (Q) of a respective one of the first to nth Flip-Flops (FF1, ..., FFn) of the shift register (131, SR);
wherein the first to n-th data registers (DR1, ..., DRn) are configured to store a data signal corresponding to n pixels (pixel 1, ..., pixel n) for a same pixel line and transferred to the first to n-th data registers (DR1, ..., DRn) via the data bus (S2P), in correspondence with first to n-th clock pulses (CLK1, ..., CLKn) output from the output terminals (Q) of the first to n-th flip-flops (FF1, ..., FFn) of the shift register (131, SR), respectively;
the shift register (131, SR) being configured to output the first to n-th clock pulses (CLK1, ..., CLKn) to the data latch (LAT) and to pause the output of the first to n-th clock pulses (CLK1, ..., CLKn) and thus to pause storing of the data signal corresponding to n pixels for the same pixel line in the first to n-th data registers (DR1, ..., DRn) of the data latch (LAT), upon occurrence of a latch hold signal (LHS),
wherein the data driver (140) or the timing controller (120) is configured to generate the latch hold signal (LHS) at each falling time or rising time of a source output enable signal (SOE) at which falling time or rising time a supply output of the data driver (140) to the display panel (150) is activated.

2. The light emitting display device according to claim 1, wherein the shift register (131, SR) comprises:
an AND gate (AND1, ..., ANDn) configured to AND the latch hold signal (LHS) and a shift clock signal (LCLK) and to output a resultant signal; and
a flip-flop (FF1, ..., FFn) configured to output the clock signal (CLK1, ..., CLKn) based on the signal output from the AND gate (AND1, ..., ANDn) and a pulse (SSP) externally applied thereto.

3. The light emitting display device according to claim **2,** wherein, when the latch hold signal (LHS) is generated with a logic low level, the data latch (LAT) connected to the shift register (131, SR) has a latch hold period in which the data latch (LAT) pauses the data latch operation.

4. The light emitting display device according to claim **2,** wherein the shift register (131, SR) further comprises:
an inverter (INV) configured to invert the latch hold signal (LHS) to an inverted latch hold signal and to output the inverted latch hold signal.

5. The light emitting display device according to claim **4,** wherein, when the latch hold signal (LHS) is generated with a logic high level, the data latch (LAT) connected to the shift register (131, SR) has a latch hold period in which the data latch (LAT) pauses the data latch operation.

6. A method for driving a light emitting display device including a display panel (150) configured to display an image, a data driver (140) configured to supply a data voltage to the display panel (150), and a timing controller (120) configured to control the data driver (140), wherein the data driver (140) includes a shift register (131, SR) and a data latch (LAT) connected thereto,
the data latch (LAT) including first to n-th data registers (DR1, ..., DRn) each connected at a data input terminal thereof to a data bus (S2P) and at a clock terminal thereof to an output terminal (Q) of a respective one of first to nth flip-flops (FF1, ..., FFn) of the shift register (131, SR);
wherein the first to n-th data registers (DR1, ..., DRn) are configured to store a data signal corresponding to n pixels (pixel 1, ..., pixel n) for a same pixel line and transferred to first to n-th data registers (DR1, ..., DRn) via the data bus (S2P), in correspondence with first to n-th clock pulses (CLK1, ..., CLKn) output from the output terminals (Q) of the first to n-th flip-flops (FF1, ..., FFn) of the shift register (131, SR), respectively;
wherein the shift register (131, SR) is configured to output the first to n-th clock pulses (CLK1, ..., CLKn) to the data latch (LAT);
the method comprising:
pausing by the shift register (131, SR) the output of the first to n-th clock pulses (CLK1, ..., CLKn) and thus pausing the storing of the data signal corresponding to n pixels for the same pixel line in the first to n-th data registers (DR1, ..., DRn) of the data latch (LAT), upon occurrence of a latch hold signal (LHS),
generating by the data driver (140) or the timing controller (120) the latch hold signal (LHS) at each falling time or rising time of a source output enable signal (SOE) at which falling time or rising time a supply output of the data driver (140) to the display panel (150) is activated.

## Patentansprüche

1. Lichtemittierende Anzeigevorrichtung, aufweisend:
ein Anzeigepanel (150), das so konfiguriert ist, dass es ein Bild anzeigt,
einen Datentreiber (140), der so konfiguriert ist, dass er dem Anzeigepanel (150) eine Datenspannung zuführt, und
eine Zeitsteuereinrichtung (120), die so konfiguriert ist, dass sie den Datentreiber (140) steuert,
wobei der Datentreiber (140) ein Schieberegister (131, SR) und einen damit verbundenen Daten-Latch (LAT) aufweist,
wobei der Daten-Latch (LAT) ein erstes bis n-tes Datenregister (DR1, ..., DRn) aufweist, die jeweils an einem Dateneingangsanschluss davon mit einem Datenbus (S2P) und an einem Taktanschluss davon mit einem Ausgangsanschluss (Q) eines jeweiligen des ersten bis n-ten Flipflops (FF1, ..., FFn) des Schieberegisters (131, SR) verbunden sind,
wobei das erste bis n-te Datenregister (DR1, ..., DRn) so konfiguriert sind, dass sie ein Datensignal speichern, das mit n Pixeln (Pixel 1, ..., Pixel n) für eine gleiche Pixelzeile korrespondiert und über den Datenbus (S2P) an das erste bis n-te Datenregister (DR1, ..., DRn) übertragen wird, korrespondierend mit einem ersten bis n-ten Taktimpuls (CLK1, ..., CLKn), die jeweils aus den Ausgangsanschlüssen (Q) des ersten bis n-ten Flipflops (FF1, ..., FFn) des Schieberegisters (141, SR) ausgegeben werden,
wobei das Schieberegister (131, SR) so konfiguriert ist, dass es den ersten bis n-ten Taktimpuls (CLK1, ..., CLKn) an den Daten-Latch (LAT) ausgibt und die Ausgabe des ersten bis n-ten Taktimpulses (CLK1, ..., CLKn) anhält und damit das Speichern des Datensignals, das mit n Pixeln für die gleiche Pixelzeile korrespondiert, in dem ersten bis n-ten Datenregister (DR1, ..., DRn) des Daten-Latches (LAT) anhält, bei Auftreten eines Latch-Halte-Signals (LHS),
wobei der Datentreiber (140) oder die Zeitsteuereinrichtung (120) so konfiguriert ist, dass er/sie das Latch-Halte-Signal (LHS) bei jedem Abfallzeitpunkt oder Anstiegszeitpunkt eines Source-Ausgabe-Freigabesignals (SOE) erzeugt, bei welchem Abfallzeitpunkt oder Anstiegszeitpunkt eine Versorgungsausgabe des Datentreibers (140) an das Anzeigepanel (150) aktiviert wird.

2. Lichtemittierende Anzeigevorrichtung gemäß Anspruch 1, wobei das Schieberegister (131, SR) aufweist:
ein UND-Gatter (AND1, ..., ANDn), das so konfiguriert ist, dass es das Latch-Halte-Signal (LHS) und ein Schiebe-Takt-Signal (LCLK) mit UND verknüpft und ein resultierendes Signal ausgibt, und
ein Flipflop (FF1, ..., FFn), das so konfiguriert ist, dass es das Taktsignal (CLK1, ..., CLKn) basierend auf dem aus dem UND-Gatter (AND1, ..., ANDn) ausgegebenen Signal und einem extern daran angelegten Impuls (SSP) ausgibt.

3. Lichtemittierende Anzeigevorrichtung gemäß Anspruch 2, wobei, wenn das Latch-Halte-Signal (LHS) mit einem Logik-Niedrigpegel erzeugt wird, der mit dem Schieberegister (131, SR) verbundene Daten-Latch (LAT) eine Latch-Halte-Periode aufweist, in der der Daten-Latch (LAT) den Daten-Latch-Betrieb anhält.

4. Lichtemittierende Anzeigevorrichtung gemäß Anspruch 2, wobei das Schieberegister (131, SR) ferner aufweist:
einen Inverter (INV), der so konfiguriert ist, dass er das Latch-Halte-Signal (LHS) in ein invertiertes Latch-Halte-Signal invertiert und das invertierte Latch-Halte-Signal ausgibt.

5. Lichtemittierende Anzeigevorrichtung gemäß Anspruch 4, wobei, wenn das Latch-Halte-Signal (LHS) mit einem Logik-Hochpegel erzeugt wird, der mit dem Schieberegister (131, SR) verbundene Daten-Latch (LAT) eine Latch-Halte-Periode aufweist, in der der Daten-Latch (LAT) den Daten-Latch-Betrieb anhält.

6. Verfahren zum Ansteuern einer lichtemittierenden Anzeigevorrichtung, die aufweist: ein Anzeigepanel (150), das so konfiguriert ist, das es ein Bild anzeigt, einen Datentreiber (140), der so konfiguriert ist, dass er dem Anzeigepanel (150) eine Datenspannung zuführt, und eine Zeitsteuereinrichtung (120), die so konfiguriert ist, dass sie den Datentreiber (140) steuert, wobei der Datentreiber (140) ein Schieberegister (131, SR) und einen damit verbundenen Daten-Latch (LAT) aufweist,
wobei der Daten-Latch (LAT) ein erstes bis n-tes Datenregister (DR1, ..., DRn) aufweist, die jeweils an einem Dateneingangsanschluss davon mit einem Datenbus (S2P) und an einem Taktanschluss davon mit einem Ausgangsanschluss (Q) eines jeweiligen eines ersten bis n-ten Flipflops (FF1, ..., FFn) des Schieberegisters (131, SR) verbunden sind,
wobei das erste bis n-te Datenregister (DR1, ..., DRn) so konfiguriert sind, dass sie ein Datensignal speichern, das mit n Pixeln (Pixel 1, ..., Pixel n) für eine gleiche Pixelzeile korrespondiert und über den Datenbus (S2P) an ein erstes bis n-tes Datenregister (DR1, ..., DRn) übertragen wird, korrespondierend mit einem ersten bis n-ten Taktimpuls (CLK1, ..., CLKn), die jeweils aus den Ausgangsanschlüssen (Q) des ersten bis n-ten Flipflops (FF1, ..., FFn) des Schieberegisters (131, SR) ausgegeben werden,
wobei das Schieberegister (131, SR) so konfiguriert ist, dass es den ersten bis n-ten Taktimpuls (CLK1, ..., CLKn) an den Daten-Latch (LAT) ausgibt,
wobei das Verfahren aufweist:
Anhalten, durch das Schieberegister (131, SR), der Ausgabe des ersten bis n-ten Taktimpulses (CLK1, ..., CLKn) und damit Anhalten des Speicherns des Datensignals, das mit n Pixeln für die gleiche Pixelzeile korrespondiert, in dem ersten bis n-ten Datenregister (DR1, ..., DRn) des Daten-Latches (LAT), bei Auftreten eines Latch-Halte-Signals (LHS),
Erzeugen, durch den Datentreiber (140) oder die Zeitsteuereinrichtung (120), des Latch-Halte-Signals (LHS) bei jedem Abfallzeitpunkt oder Anstiegszeitpunkt eines Source-Ausgabe-Freigabesignals (SOE), bei welchem Abfallzeitpunkt oder Anstiegszeitpunkt eine Versorgungsausgabe des Datentreibers (140) an das Anzeigepanel (150) aktiviert wird.

## Revendications

1. Dispositif d'affichage électroluminescent comprenant :
un panneau d'affichage (150) configuré pour afficher une image ;
un pilote de données (140) configuré pour fournir une tension de données au panneau d'affichage (150) ; et
un contrôleur d'horloge (120) configuré pour contrôler le pilote de données (140) ;
dans lequel le pilote de données (140) comprend un registre à décalage (131, SR) et un verrou de données (LAT) connecté à celui-ci,
le verrou de données (LAT) comprenant des premier à n-ième registres de données (DR1, ..., DRn), chacun connecté au niveau d'une borne d'entrée de données de celui-ci à un bus de données (S2P) et au niveau d'une borne d'horloge de celui-ci à une borne de sortie (Q) d'une respective des première à n-ième bascules (FF1, ..., FFn) du registre à décalage (131, SR) ;
dans lequel les premier à n-ième registres de données (DR1, ..., DRn) sont configurés pour stocker un signal de données correspondant à n pixels (pixel 1, ..., pixel n) pour une même ligne de pixels et transféré aux premier à n-ième registres de données (DR1, ..., DRn) via le bus de données (S2P), en correspondance avec des première à n-ième impulsions d'horloge (CLK1, ..., CLKn) émises depuis les bornes de sortie (Q) des première à n-ième bascules (FF1, ..., FFn) du registre à décalage (131, SR), respectivement ;
le registre à décalage (131, SR) étant configuré pour émettre les première à n-ième impulsions d'horloge (CLK1, ..., CLKn) au verrou de données (LAT) et pour suspendre l'émission des première à n-ième impulsions d'horloge (CLK1, ..., CLKn) et ainsi de suspendre le stockage du signal de données correspondant à n pixels pour la même ligne de pixels dans les premier à n-ième registres de données (DR1, ..., DRn) du verrou de données (LAT), lors de l'apparition d'un signal de maintien de verrouillage (LHS),
dans lequel le pilote de données (140) ou le contrôleur d'horloge (120) est configuré pour générer le signal de maintien de verrouillage (LHS) à chaque temps de descente ou temps de montée d'un signal d'activation de sortie source (SOE), auquel temps de descente ou temps de montée une sortie d'alimentation du pilote de données (140) vers le panneau d'affichage (150) est activée.

2. Dispositif d'affichage électroluminescent selon la revendication 1, dans lequel le registre à décalage (131, SR) comprend :
une porte ET (AND1, ..., ANDn) configurée pour effectuer une opération ET entre le signal de maintien de verrouillage (LHS) et un signal d'horloge de décalage (LCLK) et pour émettre un signal résultant ; et
une bascule (FF1, ..., FFn) configurée pour émettre le signal d'horloge (CLK1, ..., CLKn) sur la base du signal émis depuis la porte ET (AND1, ..., ANDn) et d'une impulsion (SSP) qui lui est appliquée de manière externe.

3. Dispositif d'affichage électroluminescent selon la revendication 2, dans lequel, lorsque le signal de maintien de verrouillage (LHS) est généré avec un niveau logique bas, le verrouillage de données (LAT) connecté au registre à décalage (131, SR) a une période de maintien de verrouillage pendant laquelle le verrouillage de données (LAT) suspend l'opération de verrouillage de données.

4. Dispositif d'affichage électroluminescent selon la revendication 2, dans lequel le registre à décalage (131, SR) comprend en outre :
un inverseur (INV) configuré pour inverser le signal de maintien de verrouillage (LHS) en un signal de maintien de verrouillage inversé et pour émettre le signal de maintien de verrouillage inversé.

5. Dispositif d'affichage électroluminescent selon la revendication 4, dans lequel, lorsque le signal de maintien de verrouillage (LHS) est généré avec un niveau logique haut, le verrouillage de données (LAT) connecté au registre à décalage (131, SR) a une période de maintien de verrouillage pendant laquelle le verrouillage de données (LAT) suspend l'opération de verrouillage de données.

6. Procédé pour commander un dispositif d'affichage électroluminescent comprenant un panneau d'affichage (150) configuré pour afficher une image, un pilote de données (140) configuré pour fournir une tension de données au panneau d'affichage (150), et un contrôleur d'horloge (120) configuré pour contrôler le pilote de données (140), dans lequel le pilote de données (140) comprend un registre à décalage (131, SR) et un verrou de données (LAT) connecté à celui-ci,
le verrou de données (LAT) comprenant des premier à n-ième registres de données (DR1, ..., DRn) chacun connecté au niveau d'une borne d'entrée de données de celui-ci à un bus de données (S2P) et au niveau d'une borne d'horloge de celui-ci à une borne de sortie (Q) d'une respective de première à n-ième bascules (FF1, ..., FFn) du registre à décalage (131, SR) ;
dans lequel les premier à n-ième registres de données (DR1, ..., DRn) sont configurés pour stocker un signal de données correspondant à n pixels (pixel 1, ..., pixel n) pour une même ligne de pixels et transféré à des premier à n-ième registres de données (DR1, ..., DRn) via le bus de données (S2P), en correspondance avec des première à n-ième impulsions d'horloge (CLK1, ..., CLKn) émises depuis les bornes de sortie (Q) des première à n-ième bascules (FF1, ..., FFn) du registre à décalage (131, SR), respectivement ;
dans lequel le registre à décalage (131, SR) est configuré pour émettre les première à n-ième impulsions d'horloge (CLK1, ..., CLKn) au verrou de données (LAT) ;
le procédé comprenant :
la suspension, par le registre à décalage (131, SR), de la sortie des première à n-ième impulsions d'horloge (CLK1, ..., CLKn) et donc la suspension du stockage du signal de données correspondant à n pixels pour la même ligne de pixels dans les premier à n-ième registres de données (DR1, ..., DRn) du verrou de données (LAT), lors de l'apparition d'un signal de maintien de verrouillage (LHS),
la génération, par le pilote de données (140) ou le contrôleur d'horloge (120), du signal de maintien de verrouillage (LHS) à chaque temps de descente ou temps de montée d'un signal d'activation de sortie source (SOE), auquel temps de descente ou temps de montée une sortie d'alimentation du pilote de données (140) vers le panneau d'affichage (150) est activée.
